# FASCICULE DE BREVET EUROPEEN

(11) **EP 1 061 278 B1**
(45) Date de publication et mention de la délivrance du brevet: **29.09.2004**
(21) Numéro de dépôt: 00401578.0
(22) Date de dépôt: 06.06.2000
(51) Int. Cl.: F16C 13/00, F16H 7/12, F16C 35/073

(54) **Dispositif de fixation pour galet à roulement et galet à roulement comportant un tel dispositif**
Befestigungsvorrichtung für eine Laufrolle und Laufrolle mit einer solchen Vorrichtung
Fastening device for a roller and roller comprising such a device

(30) Priorité: 14.06.1999 FR 9907494
(43) Date de publication de la demande: 20.12.2000
(73) Titulaire: SKF FRANCE, F-92140 Clamart (FR)
(72) Inventeur: Hauck, Helmut, 97502 Euerbach (DE); Stolz, Robert, 97422 Schweinfurt (DE); Stoyke, Bettina, 97453 Schonungen (DE); Ploessl, Dieter, 37100 Tours (FR)
(74) Mandataire: Casalonga, Axel

(56) Documents cités:
- EP-A- 0 856 684
- DE-A- 1 575 490
- DE-A- 4 235 288
- DE-U- 29 720 776
- GB-A- 2 118 675
- US-A- 4 339 158

## Description

La présente invention concerne le domaine des galets à roulement et, notamment, des galets tendeurs de courroie à roulement, par exemple les galets utilisés dans les moteurs des véhicules automobiles afin d'assurer la tension adéquate d'une courroie d'entraînement d'un accessoire du moteur, tel que la pompe à eau, l'alternateur, etc.

De manière connue en soi, de tels galets comprennent une poulie ou une jante montée sur la bague extérieure tournante d'un roulement. La poulie est destinée à venir en appui radial contre une courroie. La bague intérieure non tournante du roulement est montée sur un support permettant par un système approprié de déplacer radialement le roulement et la poulie par rapport à la courroie et de régler ainsi la tension de cette dernière. La bague intérieure non tournante du roulement est fixée sur le support de galet par l'intermédiaire d'une vis. On peut profiter de cette vis pour fixer sur le dispositif un flasque d'étanchéité venant assurer une protection supplémentaire du roulement contre les entrées d'éléments polluants indésirables en provenance de l'extérieur.

De tels dispositifs sont décrits par les documents DE-A-42 42 293 et DE-U 297 20 776.

Si de tels systèmes fonctionnent correctement, ils présentent néanmoins certains inconvénients.

Le galet à roulement, la vis de fixation et le flasque d'étanchéité sont constitués de trois pièces distinctes qui, dans la plupart des cas, ne peuvent être préassemblées, manipulées et transportées sans risque de démontage.

D'autre part, quand le roulement est fixé sur son support en utilisant le pincement du flasque entre la tête de vis et la face du roulement, il est difficile pour des raisons de résistance mécanique, d'utiliser des flasques non métalliques, ce qui a une influence néfaste sur le coût et le poids.

Dans le cas du document DE-U 297 20 776, le flasque d'étanchéité en tôle est emmanché dans l'alésage de la bague intérieure du roulement, ce qui suppose une certaine précision dans les tolérances de fabrication du flasque au niveau de la portée cylindrique d'emmanchement, d'où un accroissement des coûts de fabrication.

Un emmanchement serré acier/acier produit inévitablement des variations géométriques de la bague intérieure du roulement qui se traduisent par des réductions de jeu internes qui peuvent être relativement difficiles à maîtriser.

L'invention se propose de résoudre l'ensemble de ces problèmes.

L'invention a pour objet un dispositif de fixation économique intégrant un moyen d'étanchéité ne risquant pas de se démonter avant la fixation définitive et sans influence sur la géométrie de la bague intérieure du roulement.

Le dispositif de fixation, selon l'invention, est destiné à un galet du type comprenant une poulie montée sur un dispositif à roulement comprenant une rangée d'éléments roulants disposés entre un chemin de roulement aménagé sur une bague extérieure solidaire de la poulie et un chemin de roulement aménagé sur une bague intérieure. Ledit dispositif comprend une vis comprenant une tige cylindrique et, à une extrémité de la tige cylindrique, une tête pourvue de moyens d'entraînement en rotation. Le dispositif comprend un manchon solidaire de la vis *et en contact par son alésage avec une partie cylindrique de ladite vis,* ledit manchon comprenant des moyens de fixation sur la bague intérieure du roulement et des moyens d'étanchéité coopérant avec une partie tournante du galet. La face radiale de la tête de vis située du côté de la tige cylindrique est pourvue d'au moins un passage permettant une continuité de matière entre les moyens de fixation et les moyens d'étanchéité.

Avantageusement, le manchon est réalisé en matériau synthétique surmoulé sur la vis. Dans un mode de réalisation de l'invention, la vis comprend des moyens d'ancrage du manchon.

Avantageusement, le manchon comprend une portion annulaire entourant la partie cylindrique de la vis sur une partie de sa longueur.

Dans un mode de réalisation de l'invention, la portion annulaire du manchon est pourvue d'une surface cylindrique extérieure apte à venir serrer dans l'alésage de la bague non tournante du roulement. Ladite surface cylindrique extérieure peut être pourvue de rainures axiales.

Avantageusement, le manchon comprend une portion sensiblement radiale dont le bord interne est en contact avec la tête de vis et dont le bord externe coopère avec la partie tournante du galet pour former une étanchéité, le bord interne de ladite portion sensiblement radiale étant découpé en rayons disposés dans des rainures correspondantes de la tête de vis. Ladite tête de vis peut être apte à venir en contact avec la bague intérieure du roulement.

Dans un mode de réalisation de l'invention, la vis vient en contact avec la face du roulement par des surfaces d'appui coplanaires définissant entre elles des rainures radiales remplies de matière plastique pour former des rayons, l'épaisseur des rayons dans le sens axial étant égale ou inférieure à la profondeur axiale desdites rainures.

Dans un mode de réalisation de l'invention, le manchon se prolonge, axialement à l'opposé de la tête de vis, par des languettes radialement élastiques munies de crochets à leur extrémité, les crochets étant aptes à venir coopérer avec la face radiale de la bague intérieure opposée à la face en contact avec la tête de vis.

L'invention a également pour objet une vis de fixation destinée à un galet du type comprenant une poulie montée sur un dispositif à roulement comprenant une rangée d'éléments roulants disposés entre un chemin de roulement aménagé sur une bague extérieure solidaire de la poulie et un chemin de roulement intérieur aménagé sur une bague intérieure. La vis comprend une partie cylindiique sous la forme d'une tige au moins en partie filetée et, à une extrémité de la partie cylindrique, une tête pourvue de moyens d'entraînement en rotation et d'une face d'appui sensiblement radiale disposée du côté de la partie cylindrique. La face d'appui sensiblement radiale de la tête comprend au moins une surface apte à venir en contact avec une face latérale de la bague intérieure et au moins une rainure radiale s'étendant entre la partie cylindrique et la périphérie de la surface de contact.

Dans un mode de réalisation de l'invention, la vis comprend une pluralité de protubérances axiales dirigées vers l'extrémité libre de la partie cylindrique, lesdites protubérances présentant une surface radiale d'appui, les protubérances axiales étant disjointes de façon que des rainures radiales soient formées entre elles.

L'invention a également pour objet un galet à roulement comprenant un dispositif de fixation.

Ainsi, la vis se présente sous la forme d'une tige cylindrique partiellement ou totalement filetée et d'une tête, par exemple hexagonale, la face radiale de la tête située du côté de la tige étant pourvue de protubérances axiales séparées les unes des autres dans le sens circonférentiel par des espaces, les protubérances axiales possédant des surfaces radiales destinées à entrer en contact avec une face latérale de la bague intérieure du roulement et les espaces formant des passages permettant une continuité de matière entre la partie d'étanchéité du manchon s'étendant radialement au-delà de la tête de vis vers l'extérieur, et la partie annulaire du manchon située dans l'alésage de la bague intérieure. Lesdites surfaces radiales des protubérances axiales permettent un contact direct avec la bague intérieure. Le manchon peut être formé par surmoulage de matière plastique et est solidarisé avec la vis, dans le sens axial en raison du filetage de la vis ou éventuellement de reliefs adéquats formés sur sa tige et en rotation par les espaces et les protubérances axiales cités précédemment. La vis et son manchon plastique constituent donc un ensemble indémontable particulièrement léger et économique à réaliser. Le serrage de la vis sur la bague intérieure est sans influence sur le manchon qui présente la même forme avant et après serrage.

La présente invention sera mieux comprise à l'étude de la description détaillée de quelques modes de réalisation pris à titre d'exemples nullement limitatifs et illustrés par les dessins annexés, sur lesquels :
la figure 1 est une vue en coupe axiale d'un galet à roulement selon l'invention;
la figure 2 est une vue en coupe selon II-II de la figure 1;
la figure 3 est une vue en perspective de la vis de fixation selon l'invention;
la figure 4 est une demi-vue en coupe axiale d'une variante du mode de réalisation de la figure 1.

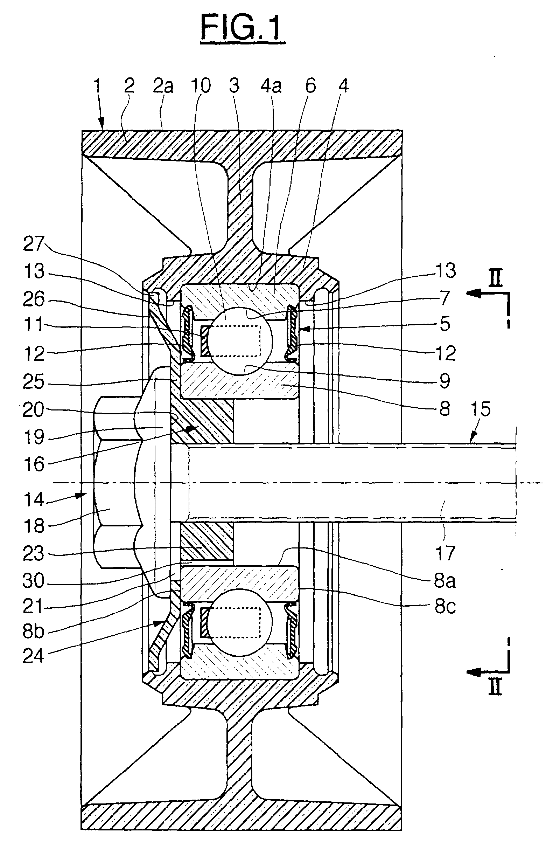

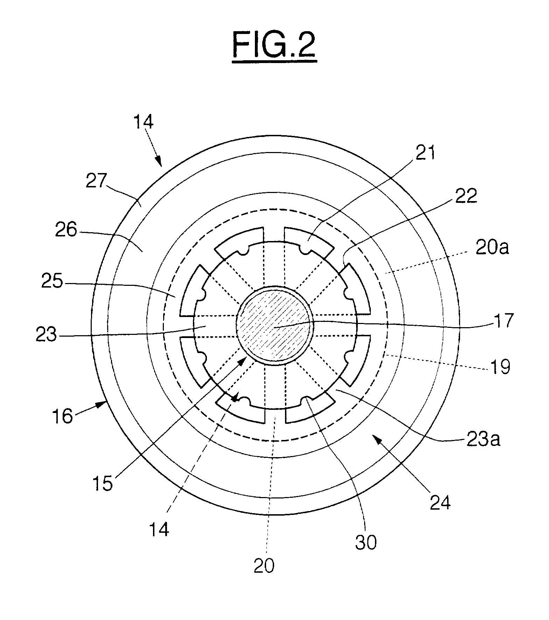

Comme on peut le voir sur les figures 1 et 2, le galet à roulement comprend une poulie 1 pourvue d'une partie cylindrique extérieure 2 dont la surface extérieure 2a est prévue pour entrer en contact avec une courroie, d'une partie radiale 3 dirigée vers l'intérieur à partir de la partie cylindrique 2 et d'une partie cylindrique intérieure 4 s'étendant à partir de l'extrémité interne de la partie radiale 3. La poulie 1 est de forme annulaire et reçoit un roulement 5 dans l'alésage 4a de la partie cylindrique intérieure 4.

Le roulement 5 comprend une bague extérieure 6 pourvue d'un chemin de roulement intérieur 7, une bague intérieure 8 pourvue d'un chemin de roulement extérieur 9, une rangée d'éléments roulants 10, par exemple des billes, disposés entre les chemins de roulement 7 et 9, et une cage 11 réalisée en matériau synthétique et maintenant un espacement circonférentiel régulier entre les éléments roulants 10. Des organes d'étanchéité 12 sont disposés de part et d'autre de la rangée d'éléments roulants 10 et sont solidaires de la bague extérieure 6 tout en venant en contact de frottement avec la bague intérieure 8. La bague intérieure 8 présente un alésage 8a et des faces latérales radiales 8b et 8c. La poulie 1, réalisée en matériau synthétique, peut être surmoulée sur la bague extérieure 6, des rebords 13 issus de la partie cylindrique intérieure 4 dirigés radialement vers l'intérieur assurant la solidarisation axiale de la poulie 1 sur la bague extérieure 6 en étant en contact avec des faces latérales 8b et 8c de cette dernière.

Un dispositif de fixation référencé 14 dans son ensemble, comprend une vis 15 et un manchon 16.

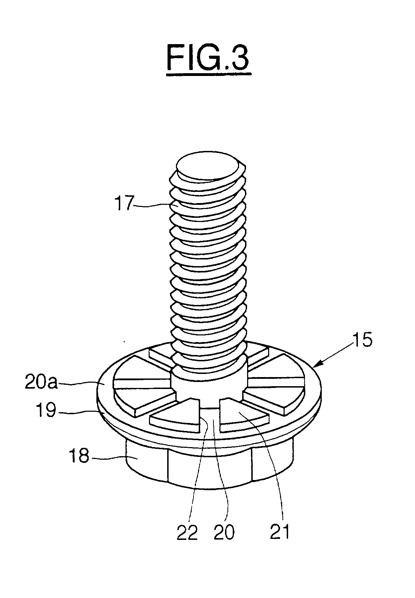

La vis 15 comprend une partie cylindrique de révolution 17 dont la surface extérieure est ici entièrement filetée. Toutefois, à titre de variante, la partie cylindrique 17 peut être partiellement filetée et partiellement lisse. La vis 15 comprend également une tête 18 de type hexagonal fixée à une extrémité de la partie cylindrique 17. Une jupe 19 prolonge la tête 18 en l'élargissant. La jupe 19 est disposée axialement du côté de la partie cylindrique 17 et présente une face radiale 20 du côté de la partie cylindrique 17. La partie radiale 20 est pourvue de huit protubérances axiales 21 que l'on voit mieux sur les figures 2 et 3, et qui sont circonférentiellement régulièrement réparties et en forme de parallélogramme s'étendant à partir de la partie cylindrique 17 vers l'extérieur.

Bien entendu, à titre de variante, on pourrait prévoir un nombre de protubérances 21 différent. Les protubérances 21 ne s'étendent pas jusqu'au bord extérieur de la face 20, mais laissent subsister une portion annulaire radiale 20a sur ledit bord. Les protubérances axiales 21 présentent toutes la même épaisseur et se terminent axialement par des surfaces radiales coplanaires 21a. Ces surfaces coplanaires 21a sont donc inscrites dans un plan parallèle et axialement légèrement décalé par rapport au plan de la face radiale 20. Les protubérances axiales 21 laissent subsister entre elles des passages sous la forme de huit rainures 22 dont le fond fait partie de la face radiale 20 et qui s'étendent entre la partie cylindrique 17 et la partie annulaire radiale 20a.

Le manchon 16 est réalisé en matériau synthétique, de préférence surmoulé sur la vis 15. Le manchon 16 comprend une partie annulaire 23 disposée entre l'alésage 8a de la bague intérieure 8 et la surface extérieure de la partie cylindrique 17 formant la queue de la vis. Ici, on voit que la partie annulaire 23 coopère avec le filetage de la partie cylindrique 17. Le manchon 16 est en contact, du côté de la tête 18 de la vis 15, avec les protubérances 21 et les rainures 22. La concordance de forme entre le manchon 16 et la vis 15 est assurée par le surmoulage du plastique sur la vis. La partie annulaire 23 du manchon 16 fait donc saillie dans les rainures 22, ce qui assure la solidarisation en rotation par rapport à la vis 15, tandis que la concordance de forme avec le filetage de la partie cylindrique 17 de la vis 15 assure la solidarisation dans le sens axial.

Le manchon 16 comprend également une partie d'étanchéité 24 disposée sur un côté du roulement 5, en étant en contact avec la tête 18 de la vis 15. La partie d'étanchéité 24 comprend une première portion radiale 25 disposée entre la jupe 19 et la face radiale 8b de la bague intérieure 8, une portion oblique 26 s'étendant radialement vers l'extérieur et axialement à l'opposé du roulement 5 à partir du bord extérieur de la première portion radiale 25 et une deuxième portion radiale 27 issue du bord extérieur de la portion oblique 26 et dont le pourtour coopère avec la partie cylindrique intérieure 4 de la poulie 1 par frottement ou passage étroit en améliorant ainsi l'étanchéité du roulement 5. De ce côté, l'étanchéité du roulement 5 est donc assurée à la fois par la partie d'étanchéité 24 du manchon 16 et par le joint d'étanchéité 12 solidaire de la bague extérieure 6. La première portion radiale 25 est en contact avec la partie annulaire 20a de la face radiale 20 et s'étend jusque dans les rainures 22 formées entre les protubérances 21 de la jupe 19. La partie annulaire 23 du manchon est reliée à la partie d'étanchéité 24 par des rayons 23a dont les dimensions sont identiques à celles des rainures 22.

Ainsi, lors du montage du galet, le dispositif de fixation intègre le moyen de fixation formé par la vis proprement dite, le moyen de centrage de la bague intérieure du roulement par rapport à la vis, formé par la partie annulaire 23 et le moyen d'étanchéité supplémentaire formé par la partie d'étanchéité 24 du manchon 16. Ce dispositif de fixation ne présente aucun risque de démontage ou de perte d'élément en raison de la solidarisation du manchon 16 et de la vis 15.

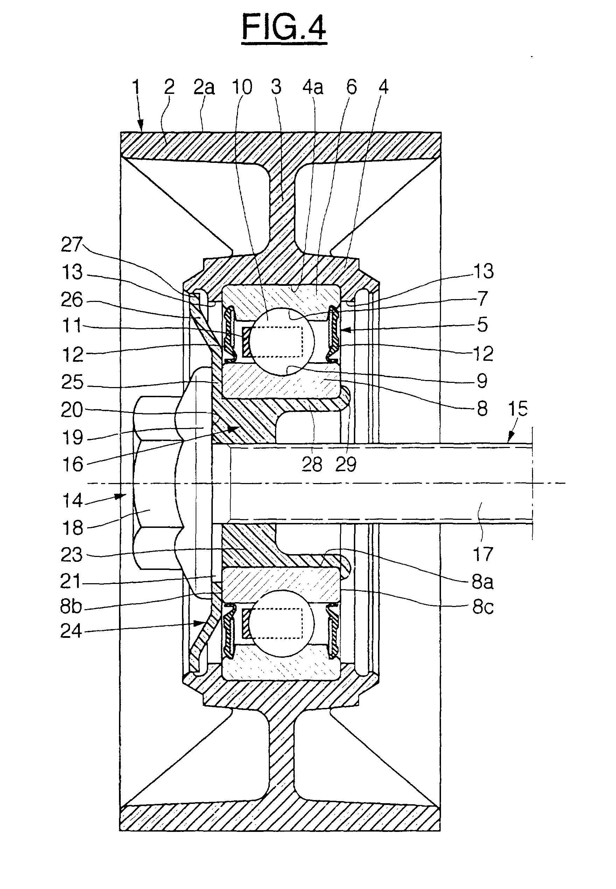

On remarque sur la figure 1 que la partie annulaire 23 du manchon 16 ne s'étend pas axialement au-delà du plan médian passant par le centre des éléments roulants 10. Au contraire, dans la variante illustrée sur la figure 4, le manchon 16 est pourvu d'une pluralité de languettes élastiques 28 s'étendant à partir de la partie annulaire 23, dans le sens axial à l'opposé de la tête 18 de la vis 15 et en contact avec l'alésage 8a de la bague intérieure 8.

Chaque languette 28 se termine par un crochet 29 qui s'étend radialement vers l'extérieur en étant en contact avec la face latérale radiale 8c de la bague intérieure 8. Ces languettes 28 munies de leur crochet 29 assurent ainsi la solidarisation du dispositif de fixation 14 sur la poulie 1 équipée du roulement 5. L'ensemble du galet peut donc être manipulé avant fixation définitive sur son support sans risque de perte de pièces.

La partie annulaire 20a de la face radiale 20 permet de pincer légèrement la première portion radiale 25 de la partie d'étanchéité 24 entre la face radiale 20 de la vis 15 et la face latérale 8b de la bague intérieure 8, ce qui augmente la rigidité de ladite partie d'étanchéité 24 et ce tout en exerçant l'appui de la vis 15 sur la face latérale 8b par l'intermédiaire des surfaces radiales 21b des protubérances 21. En d'autres termes, les rainures 22 dans lesquelles est disposée de la matière plastique formant le manchon 16, permettent d'assurer la continuité de matière entre la partie annulaire 23 et la partie d'étanchéité 24 mais sans intervenir dans le blocage de la bague intérieure 8 par la vis 15 lorsque l'on vient serrer la vis 5 pour bloquer la bague intérieure 8 sur son support, le serrage de la vis 5 sur la bague intérieure 8 s'effectuant directement par contact métal-métal entre les protubérances 21 et la face latérale 8b de la bague intérieure 8 du roulement.

La vis 14 peut être réalisée en grande série de façon économique par des procédés de matriçage à la presse, le surmoulage de matière plastique destinée à former le manchon est réalisé par moulage par injection et est fait de telle sorte que la matière plastique vienne remplir les rainures radiales 22 situées entre les protubérances axiales 21 de la vis 15 tout en laissant à nu les surfaces d'appui 21a des protubérances 21 de la vis 15 situées en regard de la face radiale 8b de la bague intérieure 8 du roulement 5 et contre laquelle elles sont destinées à venir en appui.

Le surmoulage vient d'autre part enrober sur une certaine longueur la partie filetée de la vis voisine de la tête de vis. La manchon plastique formé de la partie annulaire et de la partie d'étanchéité est ainsi parfaitement solidarisé à la vis de fixation radialement, axialement et angulairement grâce au moyen d'ancrage constitué par les rainures radiales situées entre les protubérances axiales d'une part, et le filetage de la queue de vis d'autre part. La vis et son manchon constituent donc un ensemble indémontable particulièrement léger et économique à réaliser. La vis et son manchon peuvent être remontés dans l'alésage du roulement par simple emmanchement et constituer ainsi avec le galet un ensemble facile à transporter sans risque de démontage de pièces. La matière plastique du manchon permet de réaliser une solidarisation efficace entre le roulement et la vis par simple emmanchement, sans pour cela risquer de déformer la bague du roulement comme cela est souvent le cas lors de l'utilisation de manchon de fixation en métal.

On peut avantageusement aménager des rainures axiales 30 sur la périphérie de la portée cylindrique du manchon afin de faciliter son emmanchement dans l'alésage de la bague intérieure du roulement. En toute rigueur, les rainures axiales 30 ne devraient pas être visibles sur la figure 1. Toutefois, pour une meilleure compréhension, une rainure axiale 30 a été représentée sur la moitié inférieure de la figure 1, comme si le plan de coupe avait été décalé de quelques degrés d'angle entre la moitié inférieure et la moitié supérieure de la figure 1.

La vis est parfaitement centrée par rapport à ladite bague intérieure, ce qui facilite le montage ultérieur du galet sur son support, non représenté, par l'intermédiaire de ladite bague intérieure. La solidarisation du manchon avec le roulement par serrage dans l'alésage de la bague intérieure du roulement peut être remplacée par les languettes d'accrochage du mode de réalisation de la figure 4. La portée cylindrique du manchon ne sert alors qu'au centrage des pièces.

Lors du montage du galet sur son support, lorsqu'on serre la vis de fixation pour solidariser la bague intérieure non tournante sur le support, les surfaces d'appui de la vis viennent serrer contre la face du roulement sans que la matière plastique du manchon risque d'être endommagée par ledit serrage.

Grâce à l'invention, on peut obtenir de façon économique un ensemble comportant un galet à roulement muni de son dispositif de fixation et du système d'étanchéité complémentaire. La constitution d'un tel ensemble se fait par l'assemblage de seulement deux sous-ensembles, galet et dispositif de fixation. Le nombre de pièces à gérer et à stocker est donc très réduit. L'assemblage du dispositif de fixation sur le galet est extrêmement simple et il est facilement automatisable. L'ensemble ainsi constitué est léger et peut être transporté et manipulé jusqu'au lieu de montage final sur le support en toute sécurité, sans risque de perte de pièces.

## Revendications

1. Dispositif de fixation pour galet, du type comprenant une poulie (1) montée sur un dispositif à roulement (5) comprenant une rangée d'éléments roulants (10) disposés entre un chemin de roulement aménagé sur une bague extérieure (6) solidaire de la poulie et un chemin de roulement aménagé sur une bague intérieure (8), ledit dispositif comprenant une vis (15) comprenant une tige cylindrique (17) et, à une extrémité de la tige cylindrique, une tête (18) pourvue d'un moyen d'entraînement en rotation, **caractérisé par le fait qu'**il comprend un manchon (16) disposé sur la vis *et en contact par son alésage avec une partie cylindrique de ladite vis,* ledit manchon comprenant des moyens de fixation sur la bague intérieure du roulement et des moyens d'étanchéité coopérant avec une partie tournante du galet, la face radiale (20) de la tête de vis située du côté de la tige cylindrique étant pourvue d'au moins un passage (22) permettant une continuité de matière entre les moyens de fixation et les moyens d'étanchéité.

2. Dispositif selon la revendication 1, **caractérisé par le fait que** le manchon (16) est réalisé en matériau synthétique surmoulé sur la vis.

3. Dispositif selon la revendication 1 ou 2, **caractérisé par le fait que** la vis (15) comprend des moyens d'ancrage du manchon.

4. Dispositif selon l'une quelconque des revendications 1 à 3, **caractérisé par le fait que** le manchon (16) comprend une portion annulaire (23) entourant la partie cylindrique de la vis sur une partie de sa longueur.

5. Dispositif selon la revendication 4, **caractérisé par le fait que** la portion annulaire du manchon est pourvue d'une surface cylindrique extérieure apte à venir serrer dans l'alésage de la bague non tournante du roulement.

6. Dispositif selon la revendication 5, **caractérisé par le fait que** ladite surface cylindrique extérieure est pourvue de rainures axiales (30).

7. Dispositif selon l'une quelconque des revendications précédentes, **caractérisé par le fait que** le manchon comprend une portion (24) sensiblement radiale dont le bord interne est en contact avec la tête de vis et dont le bord externe coopère avec la partie tournante du galet pour former une étanchéité, le bord interne de ladite portion sensiblement correspondantes de la tête de vis.

8. Dispositif selon l'une quelconque des revendications précédentes, **caractérisé par le fait que** ladite tête de vis est apte à venir en contact avec la bague intérieure du roulement.

9. Dispositif suivant la revendication 8, **caractérisé par le fait que** la vis vient en contact avec la face du roulement par des surfaces d'appui coplanaires définissant entre elles des rainures radiales remplies de matière plastique pour former des rayons, l'épaisseur des rayons dans le sens axial étant égale ou inférieure à la profondeur axiale desdites rainures.

10. Dispositif selon l'une quelconque des revendications précédentes, **caractérisé par le fait que** le manchon se prolonge, axialement à l'opposé de la tête de vis, par des languettes (28) radialement élastiques munies de crochets (29) à leur extrémité, les crochets étant aptes à venir coopérer avec la face radiale (20) de la bague intérieure opposée à la face en contact avec la tête de vis.

11. Vis de fixation pour dispositif de fixation pour galet selon l'une quelconque des revendications précédentes, **caractérisée par le fait que** la tête comprend une face sensiblement radiale disposée du côté de la partie cylindrique et comprenant au moins une surface apte à venir en contact avec une face latérale de la bague intérieure et au moins une rainure radiale (22) s'étendant entre la partie cylindrique et la périphérie de la surface de contact.

12. Galet à roulement comprenant un dispositif selon l'une quelconque des revendications 1 à 10.

## Patentansprüche

1. Rollenbefestigungsvorrichtung in der Bauart mit einer Riemenscheibe (1), die an einer Wälzlagervorrichtung (5) angebracht ist, zu der eine Reihe von Wälzkörpern (10) gehört, die zwischen einer Lauffläche, die auf einem an der Riemenscheibe befestigten Außenring (6) ausgebildet ist, und einer auf einem Innenring (8) ausgebildeten Lauffläche angeordnet sind, wobei zu der Vorrichtung eine Schraube (15) gehört, die einen zylindrischen Schaft (17) und an einem Ende des zylindrischen Schaftes einen Kopf (18) aufweist, der mit einem Rotationsantriebsmittel versehen ist, **dadurch gekennzeichnet, dass** zu der Vorrichtung eine Manschette (16) gehört, die auf der Schraube sitzt und die über ihre zylindrische Bohrung mit einem zylindrischen Abschnitt der Schraube in Berührung steht, wobei die Manschette Mittel zur Befestigung an dem Innenring des Wälzlagers und Dichtungsmittel aufweist, die mit einem umlaufenden Bereich der Rolle zusammenwirken, wobei die auf der Seite des zylindrischen Schaftes angeordnete radiale Fläche (20) des Schraubenkopfs mit wenigstens einem Durchlass (22) ausgebildet ist, der es erlaubt, dass sich der Werkstoff des Befestigungsmittels in die Dichtungseinrichtung fortsetzt.

2. Vorrichtung nach Anspruch 1, **dadurch gekennzeichnet, dass** die Manschette (16) aus Kunststoff erzeugt ist, der auf die Schraube aufgespritzt ist.

3. Vorrichtung nach Anspruch 1 oder 2, **dadurch gekennzeichnet, dass** zu der Schraube (15) Mittel zur Befestigung der Manschette aufweist.

4. Vorrichtung nach einem der Ansprüche 1 bis 3, **dadurch gekennzeichnet, dass** die Manschette (16) einen ringförmigen Abschnitt (23) aufweist, der den zylindrischen Abschnitt der Schraube über einen Abschnitt seiner Länge umgibt.

5. Vorrichtung nach Anspruch 4, **dadurch gekennzeichnet, dass** der ringförmige Abschnitt der Manschette mit einer zylindrischen Außenumfangsfläche ausgebildet ist, die geeignet ist, um in die zylindrische Bohrung des stillstehenden Rings des Wälzlagers gepresst zu werden.

6. Vorrichtung nach Anspruch 5, **dadurch gekennzeichnet, dass** die zylindrische Außenumfangsfläche mit axialen Nuten ausgebildet ist.

7. Vorrichtung nach einem der vorhergehenden Ansprüche, **dadurch gekennzeichnet, dass** die Manschette einen im Wesentlichen radialen Abschnitt (24) aufweist, dessen innerer Rand mit dem Schraubenkopf in Berührung steht, und dessen äußerer Rand mit dem umlaufenden Abschnitt der Rolle zusammenwirkt, um eine Dichtung zu bilden, wobei der innerer Rand des im Wesentlichen radialen Abschnitts in Strahlen eingeschnitten ist, die in entsprechenden Nuten (22) des Schraubenkopfs angeordnet sind.

8. Vorrichtung nach einem der vorhergehenden Ansprüche, **dadurch gekennzeichnet, dass** der Schraubenkopf in der Lage ist mit dem Innenring des Wälzlagers in Berührung zu kommen.

9. Vorrichtung nach Anspruch 8, **dadurch gekennzeichnet, dass** die Schraube mit der Stirnseite des Wälzlagers über koplanare Anlageflächen in Berührung kommt, die zwischen sich radiale Nuten definieren, die mit Kunststoff gefüllt sind, um Strahlen zu bilden, wobei die Dicke der Strahlen in axialer Richtung gleiche oder kleiner als die axiale Tiefe der Nuten ist.

10. Vorrichtung nach einem der vorhergehenden Ansprüche, **dadurch gekennzeichnet, dass** die Manschette von dem Schraubenkopf aus in axialer Richtung durch in radialer Richtung elastische Zungen (28) fortgesetzt wird, die an ihren Enden mit Krallen (29) ausgebildet sind, wobei die Krallen in der Lage sind, mit der radialen Fläche (20) des Innenrings zusammenzuwirken, die der in Berührung mit dem Schraubenkopf befindlichen Stirnseite abgewandt ist.

11. Befestigungsschraube für eine Rollenbefestigungsvorrichtung nach einem der vorhergehenden Ansprüche, **dadurch gekennzeichnet, dass** der Kopf eine im Wesentlichen radiale Fläche aufweist, die auf der Seite des zylindrischen Abschnitts angeordnet ist und die mindestens eine Fläche, die geeignet ist, um mit einer seitlichen Fläche des Innenrings in Berührung zu kommen, sowie mindestens eine radiale Nut (22) aufweist, die sich zwischen dem zylindrischen Abschnitt und dem Umfang der Berührungsfläche erstreckt.

12. Wälzlagerrolle, die eine Vorrichtung nach einem der Ansprüche 1 bis 10 aufweist.

## Claims

1. Roller-fixing device, of the type comprising a pulley (1) mounted on a rolling-bearing device (5) comprising a row of rolling elements (10) arranged between a ball race provided on an outer ring (6) integral with the pulley and a ball race provided on an inner ring (8), said device comprising a screw (15) comprising a cylindrical rod (17) and, at one end of the cylindrical rod, a head (18) provided with a rotary-drive means, **characterized in that** it comprises a sleeve (16) arranged on the screw and in contact via its bore with a cylindrical part of said screw, said sleeve comprising means for fixing on the inner ring of the rolling bearing and leaktight means interacting with a turning part of the roller, the radial face (20) of the screw head located on the cylindrical-rod side being provided with at least one passage (22) allowing continuity of material between the fixing means and the leaktight means.

2. Device according to Claim 1, **characterized in that** the sleeve (16) is produced from synthetic material overmoulded onto the screw.

3. Device according to Claim 1 or 2, **characterized in that** the screw (15) comprises means for anchoring the sleeve.

4. Device according to any one of Claims 1 to 3, **characterized in that** the sleeve (16) comprises an annular portion (23) surrounding the cylindrical part of the screw over a part of its length.

5. Device according to Claim 4, **characterized in that** the annular portion of the sleeve is provided with an outer cylindrical surface capable of gripping in the bore of the nonturning ring of the rolling bearing.

6. Device according to Claim 5, **characterized in that** said outer cylindrical surface is provided with axial grooves.

7. Device according to any one of the preceding claims, **characterized in that** the sleeve comprises a substantially radial portion (24), the inner edge of which is in contact with the screw head and the outer edge of which interacts with the turning part of the roller in order to form a seal, the inner edge of said substantially radial portion being cut into radii arranged in the corresponding grooves (22) of the screw head.

8. Device according to any one of the preceding claims, **characterized in that** said screw head is capable of coming into contact with the inner ring of the rolling bearing.

9. Device according to Claim 8, **characterized in that** the screw comes into contact with the face of the rolling bearing via coplanar support surfaces which between them define radial grooves filled with plastics material in order to form radii, the thickness of the radii in the axial direction being equal to or less than the axial depth of said grooves.

10. Device according to any one of the preceding claims, **characterized in that** the sleeve is extended, axially away from the screw head, by radially elastic tongues (28) equipped with hooks (29) at their end, the hooks being capable of interacting with the radial face (20) of the inner ring opposite the face in contact with the screw head.

11. Fixing screw for a roller-fixing device according to any one of the preceding claims, **characterized in that** the head comprises a substantially radial face arranged on the cylindrical-part side and comprising at least one surface capable of coming into contact with a lateral face of the inner ring and at least one radial groove (22) extending between the cylindrical part and the periphery of the contact surface.

12. Rolling-bearing roller comprising a device according to any one of Claims 1 to 10.
